# EUROPÄISCHE PATENTSCHRIFT

(11) **EP 1 447 888 B1**
(45) Veröffentlichungstag und Bekanntmachung des Hinweises auf die Patenterteilung: **10.12.2014**
(21) Anmeldenummer: 04002412.7
(22) Anmeldetag: 04.02.2004
(51) Int. Cl.: H01R 43/28, B25J 15/02

(54) **Greifer für eine Kabelbearbeitungseinrichtung**
Gripper for a cable treating device
Pince pour un dispositif pour traiter des câbles

(30) Priorität: 17.02.2003 EP 03405094
(43) Veröffentlichungstag der Anmeldung: 18.08.2004
(73) Patentinhaber: Komax Holding AG, 6036 Dierikon (CH)
(72) Erfinder: Conte, Alois, Dipl. Ing. HTL, CH-6030 Ebikon (CH)
(74) Vertreter: Blöchle, Hans

(56) Entgegenhaltungen:
- EP-A- 1 032 095
- DE-A- 2 254 784
- US-A- 3 731 821
- US-A- 4 733 457

## Beschreibung

Die Erfindung betrifft eine Kabelbearbeitungseinrichtung mit Bearbeitungsstationen zur Konfektionierung eines Kabels, wobei mindestens ein Schwenkarm als Zuführeinrichtung das Kabel den Bearbeitungsstationen zuführt.

Üblicherweise sind die Bearbeitungsstationen einer Kabelbearbeitungsmaschine im Kreis angeordnet. Je mehr Bearbeitungschritte an den Kabelenden vorgenommen werden, umso mehr Bearbeitungsstationen sind notwendig, wobei der Radius des Anordnungskreises zunimmt. Ein zunehmend grösserer Kreisradius bedingt Kabelzuführeinrichtungen mit zunehmend längeren Schwenkarmen. Lange Schwenkarme mit am freien Ende angeordneten Kabelgreifern weisen grosse Massen auf. Hinzu kommen die Massen des Greifers und des im Greifer angeordneten Greiferantriebes.

Aus dem Dokument EP-A 1 032 095 ist eine Kabelbearbeitungsmaschine mit Bearbeitungsstationen bekannt, die dazu ausgelegt ist Kabel zu verdrillen. Es kommt eine Schwenkeinheit mit einem Greiferpaar zum Einsatz. Die Greifer sind schwenkbar an einem Ausleger gelagert und können mittels Schwenkantrieben geschwenkt werden.

Nachteilig bei den bekannten Zuführeinrichtungen ist, dass bei längeren Schwenkarmen grössere Antriebe notwendig sind. Grössere Antriebe bedingen wiederum eine gesamthaft grössere Kabelbearbeitungsmaschine.

Aus dem Dokument US-A 3 731 821 ist eine Vorrichtung zum Transferieren von Gegenständen bekannt, die verschiedene Greifer beschreibt. Es geht hier speziell um eine Vorrichtung, die dazu ausgelegt ist Gegenstände einer Presse zuzuführen. Diese Vorrichtung weist einen Arm auf, woran an einem. Ende Greifer angeordnet sind, deren Antrieb an dem Schwenkarm angeordnet ist.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Kabelzuführeinrichtung zu schaffen, bei der das Verhältnis der bewegten Masse des Schwenkarmes inkl. Greifer zur Masse des bewegten Kabels klein ist.

Vorteilhafte Weiterbildungen der Erfindung sind in den abhängigen Patentansprüchen angegeben.

Die durch die Erfindung erreichten Vorteile sind im wesentlichen darin zu sehen, dass einhergehend mit der Massenreduktion der Schwenkarm länger gebaut werden kann. Der leichtere Schwenkarm kann bei gleichem Antrieb schneller bewegt werden. Ausserdem wird mit dem ausserhalb des Greifers angeordneten Greiferantrieb die zu bewegende Greifermasse wesentlich reduziert. Die erfindungsgemässe Greiferkonstruktion umfasst eine massenarme Umlenkung einer linearen Kraft in zwei Drehbewegungen mit gegenläufigem und symmetrischem Verlauf. Der beim vorschieben des Kabels notwendige, minimale Abstand der Kabelachse zum untersten Punkt des Greifers bei geöffneten Greiferbacken ist mit der erfindungsgemässen Greiferkonstruktion gewährleistet. Beide Greiferbacken drehen sich um eine konzentrische Drehachse, wobei der Höhenversatz beim Greifen von Kabeln mit unterschiedlichen Durchmessern minimiert wird.

Anhand der beiliegenden Figuren wird die vorliegende Erfindung näher erläutert.

Es zeigen:
Fig. 1 eine Kabelbearbeitungsmaschine mit zwei Schwenkarmen,
Fig. 2 Einzelheiten eines Schwenkarmes mit Greifer,
Fig. 3 Einzelheiten des Schwenkarm-Linearantriebes,
Fig. 4 den Greifer mit Greiferantrieb,
Fig. 5 den Greifer in geschlossener Stellung,
Fig. 6 den Greifer in geöffneter Stellung und
Fig. 7 eine Anordnungsvariante des Greiferantriebes.

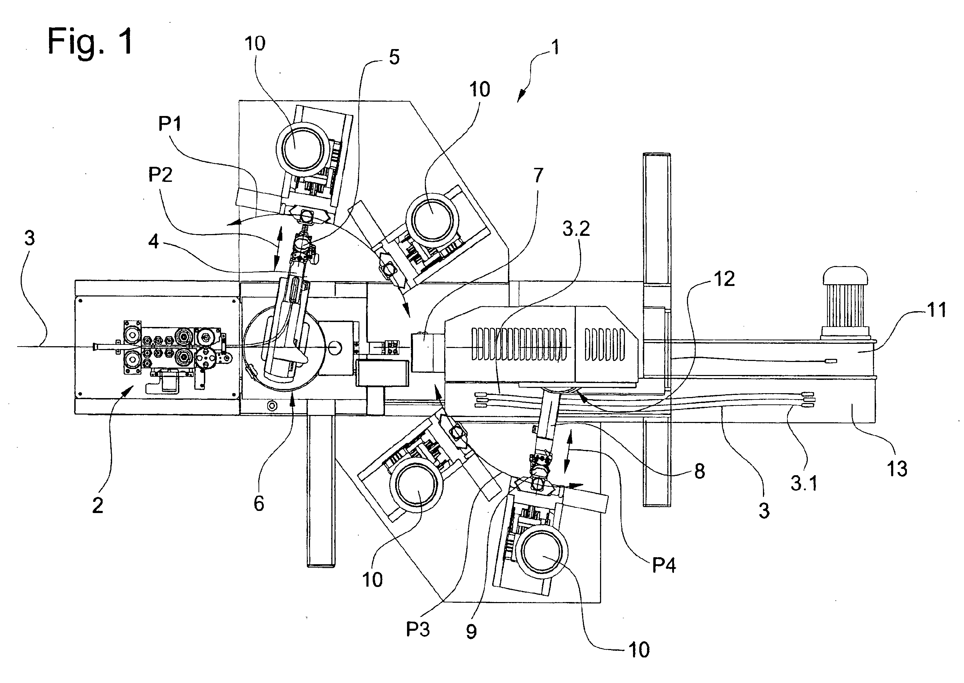

Fig. 1 zeigt eine Kabelbearbeitungsmaschine 1 mit einer als Bandantrieb 2 ausgebildeten Kabelvorschubeinrichtung, wobei der Bandantrieb 2 ein Kabel 3 einem ersten Schwenkarm 4 mit einem ersten Greifer 5 zuführt. Mittels ersten Antrieben 6 kann der erste Schwenkarm 4 in eine mit einem Pfeil P1 symbolisierte Schwenkbewegung und/oder in eine mit einem Pfeil P2 symbolisierte Linearbewegung versetzt werden. Mit Trenn-/Abisoliermessern 7 kann das Kabel 3 getrennt und/oder abisoliert werden.

Im weiteren weist die Kabelbearbeitungsmaschine 1 einen zweiten Schwenkarm 8 mit einem zweiten Greifer 9 auf. Mittels zweiten Antrieben 12 kann der zweite Schwenkarm 8 in eine mit einem Pfeil P3 symbolisierte Schwenkbewegung und/oder in eine mit einem Pfeil P4 symbolisierte Linearbewegung versetzt werden. Der erste Schwenkarm 4 bedient als Zuführeinrichtung mittels Drehbewegung P1 und Linearbewegung P2 seitlich der Kabellängsachse angeordnete Bearbeitungsstationen 10 (beispielsweise Crimppressen und/oder Tüllenbestücker) mit voreilenden Kabelenden 3.1. Der mittels zweiten Antrieben 12 in Bewegung versetzte zweite Schwenkarm 8 bedient als Zuführeinrichtung mittels Drehbewegung P3 und Linearbewegung P4 seitlich der Kabellängsachse angeordnete Bearbeitungsstationen 10 (beispielsweise Crimppressen und/oder Tüllenbestücker) mit nacheilenden Kabelenden 3.2. Nach der Bearbeitung des voreilenden Kabelendes 3.1 wird das Kabel 3 mittels eines Transportbandes 11 weitertransportiert. Der zweite Greifer 9 fasst das nacheilende Kabelende 3.2, danach wird das Kabel 3 getrennt und das nacheilende Kabelende 3.2 abisoliert und den Bearbeitungsstationen 10 zugeführt. Nach der Bearbeitung des nacheilenden Kabelendes 3.2 gelangt das Kabel 3 in eine Ablage 13.

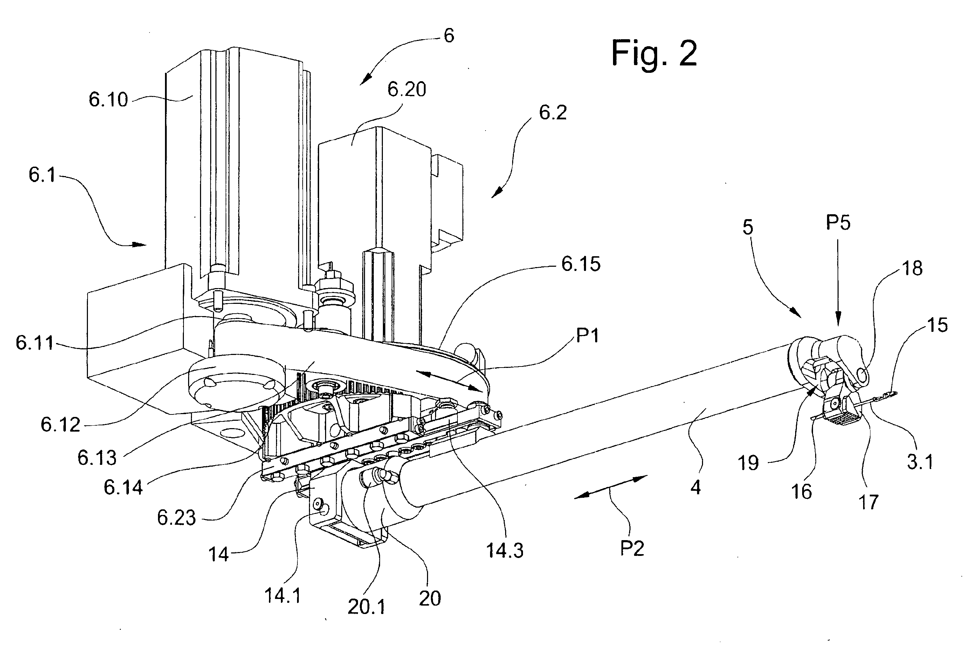

Fig. 2 zeigt Einzelheiten des ersten Schwenkarmes 4 mit erstem Greifer 5. Der Aufbau des zweiten Schwenkarmes 8 mit zweitem Greifer 9 ist identisch mit dem Aufbau des ersten Schwenkarmes 4 mit Greifer 5. Die ersten Antriebe 6 bestehen aus einem Antrieb 6.1 für die Schwenkbewegung P1 und aus einem Antrieb 6.2 für die Linearbewegung P2 des Schwenkarmes 4. Der Antrieb 6.1 weist ein mittels eines Motors 6.10 antreibbares Treibritzel 6.11 auf, wobei ein Drehgeber 6.12 die Ritzelbewegung erfasst. Die Drehbewegung des Treibritzels 6.11 wird mittels Riemen 6.13 auf eine Riemenscheibe 6.14 übertragen, die Bestandteil eines Drehtellers 6.15 ist, an dem der Antrieb 6.2 für die Linearbewegung P2 des Schwenkarmes 4 angeordnet ist. Der erste Schwenkarm 4 ist an einer Konsole 14 um eine Achse 14.1 drehbar gelagert, wobei eine Federkraft den Schwenkarm 4 im Gegenuhrzeigersinn beaufschlagt. Zum Einlegen des abisolierten Endes des voreilenden Kabelendes 3.1 beispielsweise in einen Crimpkontakt 15 wirkt beim Crimpvorgang die von der Crimppresse auf den Greifer 5 ausgeübte Kraft P5 der Federkraft entgegen, wobei der Schwenkarm 4 mit dem Greifer 5 eine Drehbewegung im Uhrzeigersinn ausführt. Das voreilende Kabelende 3.1 wird mittels einer ersten Greiferbacke 16 und einer zweiten Greiferbacke 17 des Greifers 5 festgehalten. Die drehbar an einer Achse 18 angeordneten Backen 16,17 werden mittels Getriebe 19 geöffnet und geschlossen.

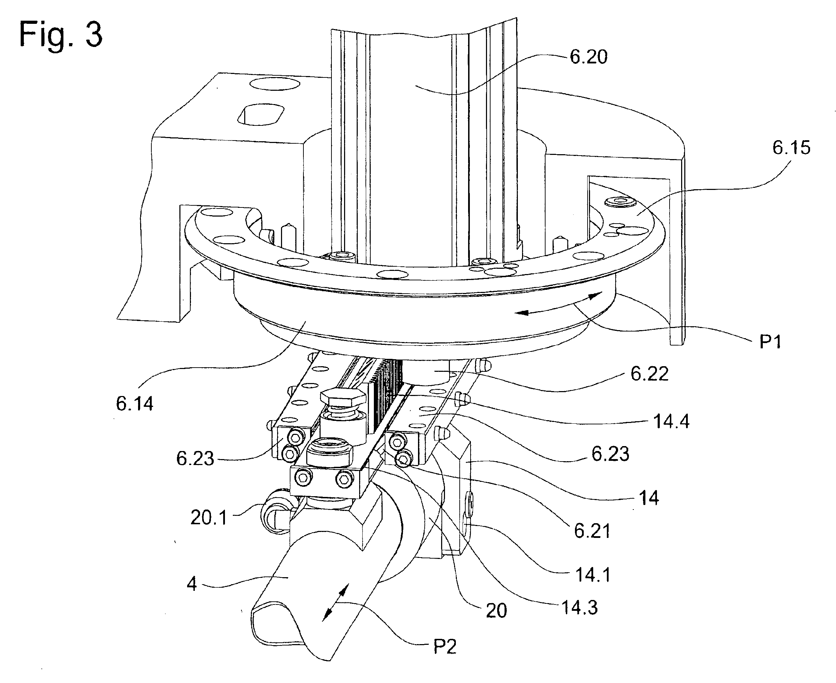

Fig. 3 zeigt den Antrieb 6.2 für die Linearbewegung P2 des Schwenkarmes 4. Der Schwenkarm 4 wird mittels einer am Drehteller 6.15 angeordneten Linearführung 6.23 geführt, wobei ein prismaförmiges Lager 6.21 eine Linearführung 14.3 des Schwenkarmes 4 führt. Ein Zahnritzel 6.22 des am Drehteller 6.15 angeordneten Motors 6.20 greift in eine an der Linearführung 14.3 angeordnete Zahnstange 14.4 ein, wobei die Rotationsbewegung des Zahnritzels 6.22 in die Linearbewegung P2 umgewandelt wird.

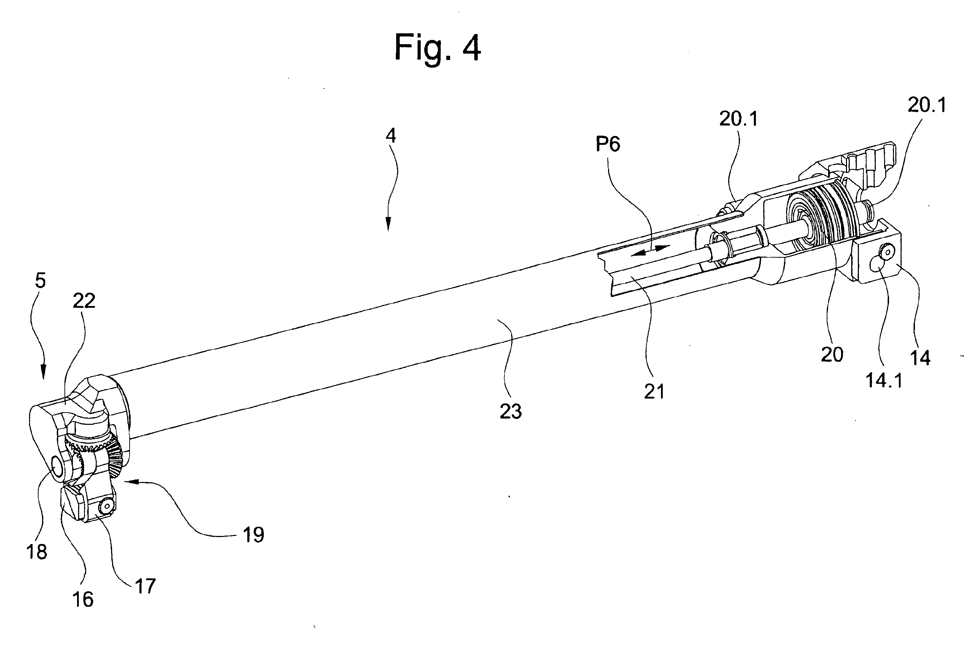

Fig. 4 zeigt den ersten Schwenkarm 4 mit erstem Greifer 5 und einem am bzw. im Schwenkarm 4 angeordneten Greiferantrieb, der im wesentlichen aus einem Aktuator 20 besteht. Zur Kraftübertragung auf das Getriebe 19 dient eine Stange 21. Der Aktuator 20 kann beispielsweise ein Pneumatikzylinder sein, der über einen Anschluss 20.1 mit Druckluft versorgbar ist. Die Stange 21 kann auch mittels elektrischem Aktuator 20 betätigbar sein. Der Aktuator 20 betätigt die beispielsweise aus Aluminium bestehende Stange 21 in den mittels Doppelpfeil P6 symbolisierten Richtungen. Einenends ist die Stange 21 mit dem am Schwenkarm 4 angeordneten Aktuator 20 und anderenends ist die Stange 21 mit dem in einem Gehäuse 22 angeordneten Getriebe 19 des Greifers 5 verbunden. Die Stange 21 ist umgeben vom Rohr 23 des Schwenkarmes 4, das beispielsweise aus Kunststoff bestehen kann.

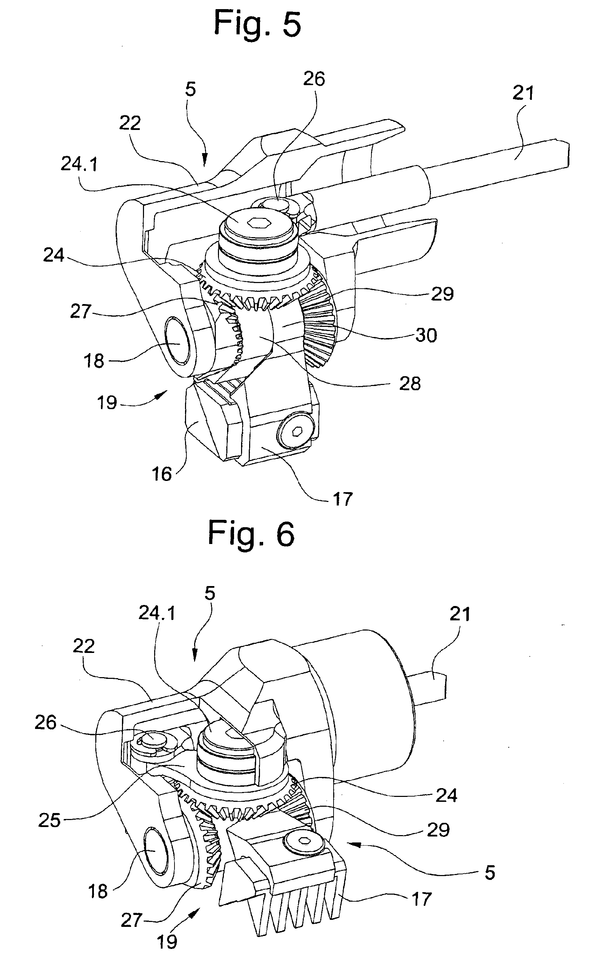

Fig. 5 und Fig. 6 zeigen den Aufbau des ersten Greifers 5, wobei Fig. 5 den Greifer 5 in geschlossener Stellung und Fig. 6 den Greifer 5 in geöffneter Stellung zeigen. Das Getriebe 19 besteht aus einem mittels Achse 24.1 am Gehäuse 22 gelagerten Kegelrad 24 mit Hebel 25, an dem eine Achse 26 angeordnet ist. Die Stange 21 ist gelenkig mit der Achse 26 verbunden. Das Kegelrad 24 kämmt mit einem Kegelrad 27 mit Greiferhebel 28 der ersten Greiferbacke 16 und mit einem Kegelrad 29 mit Greiferhebel 30 der zweiten Greiferbacke 17. Beide Greiferhebel 28, 30 sind an der Achse 18 gelenkig gelagert. Die Kabelmitte des Greifers 5 ist dadurch unabhängig vom Kabeldurchmesser und bleibt an Ort.

Die lineare Bewegung P6 der Stange 21 wird mittels des Getriebes 19 in zwei Drehbewegungen mit gegenläufigem, symmetrischem Verlauf umgewandelt, wobei der Aktuator 20 zum Schliessen der Greiferbacken 16,17 bzw. zum Festhalten des Kabelendes 3.1 die Stange 21 zieht und zum Öffnen der Greiferbacken 16,17 bzw. zum Loslassen des Kabelendes 3.1 die Stange 21 stösst.

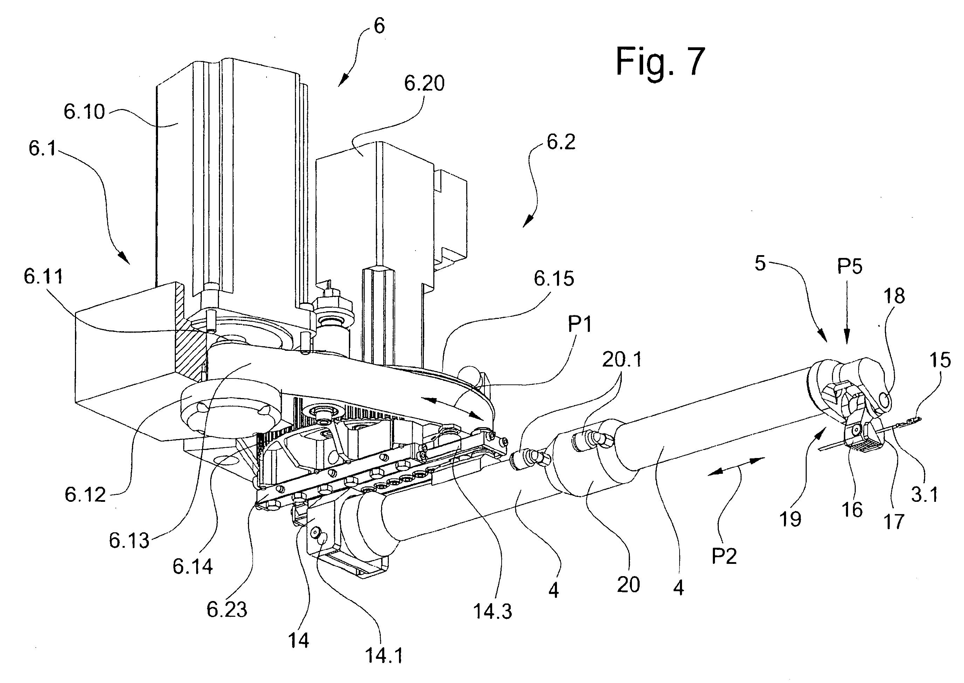

Im gezeigten Ausführungsbeispiel ist der Greifer 5 am einen Ende des Schwenkarmes 4 und der Aktuator 20 am anderen Ende des Schwenkarmes 4 angeordnet. Je nach Aktuator 20 (pneumatisch, elektrisch, etc.) und je nach Stange 21 (werkstoff, Formgebung, Dimensionierung, etc.) kann der Aktuator wie in Fig. 7 gezeigt, unter Berücksichtigung der optimierten, total bewegten Masse des Schwenkarmes 4, auch näher beim Greifer 5 angeordnet sein.

## Patentansprüche

1. Kabelbearbeitungseinrichtung (1) mit Bearbeitungsstationen (9,10) zur Konfektionierung eines Kabels (3), wobei mindestens ein Schwenkarm (4,8) als Zuführeinrichtung das Kabel (3) den Bearbeitungsstationen (9,10 zuführt, wobei der Schwenkarm (4,8) einen Greifer (5,9) aufweist, **dadurch gekennzeichnet,**
**dass** ein Antrieb (20) des Greifers (5, 9) am bzw. im Schwenkarm (4,8) angeordnet ist, wobei der Greifer (5,9) mittels einer vom Antrieb (20) ausgehenden linearen Bewegung (P6) betätigbar ist, wobei die lineare Bewegung (P6) mittels einer Stange (21) auf ein Getriebe (19) des Greifers (5,9) übertragbar ist, wobei das Getriebe (19) die lineare Bewegung (P6) in zwei Drehbewegungen mit gegenläufigem, symmetrischem Verlauf umwandelt.

2. Einrichtung nach Anspruch 1,
**dadurch gekennzeichnet**,
das der Greifer (5,9) am einen Ende des Schwenkarmes (4) und der Aktuator (20) am anderen Ende des Schwenkarmes (4) angeordnet ist.

3. Einrichtung nach Anspruch 1 oder 2,
**dadurch gekennzeichnet,**
**dass** das Getriebe (19) ein mittels der Stange (21) betätigbares Kegelrad (24) aufweist, das mit zwei weiteren Kegelrädern (27,29) kämmt, wobei die weiteren Kegelräder (27,29) je einen Greiferhebel (28,30) mit Greiferbacke (16,17) antreiben.

4. Einrichtung nach Anspruch 3,
**dadurch gekennzeichnet,**
**dass** die weiteren Kegelräder (27,29) und Greiferhebel (28,30) an einer Achse (18) angeordnet sind.

## Claims

1. Cable processing device (1) with processing stations (9, 10) for fitting out a cable (3), wherein at least one pivot arm (4, 8) as feed device feeds the cable (3) to the processing stations (9, 10), wherein the pivot arm (4, 8) has a gripper (5, 9), **characterised in that** a drive (20) of the gripper (5, 9) is arranged at or in the pivot arm (4, 8), wherein the gripper (5, 9) is actuable by means of a linear movement (P6) deriving from the drive (20), wherein the linear movement (P6) is transmissible by means of a rod (21) to a transmission (19) of the gripper (5, 9) and wherein the transmission (19) converts the linear movement (P6) into two rotational movements with symmetrical travel in opposite sense.

2. Device according to claim 1, **characterised in that** the gripper (5, 9) is arranged at one end of the pivot arm (4) and the actuator (20) at the other end of the pivot arm (4).

3. Device according to claim 1 or 2, **characterised in that** the transmission (19) comprises a bevel gear (24), which is actuable by means of the rod (21) and which meshes with two further bevel gears (27, 29), wherein the further bevel gears (27, 29) each drive a respective gripper lever (28, 30) with gripper jaw (16, 17).

4. Device according to claim 3, **characterised in that** the further bevel gears (27, 29) and gripper levers (28, 30) are arranged at an axle (18).

## Revendications

1. Dispositif de traitement de câbles (1) avec des stations de traitement (9, 10) pour le préassemblage d'un câble (3), étant précisé qu'au moins un bras pivotant (4, 8) amène, comme dispositif d'amenée, le câble (3) dans les stations de traitement (9, 10), et que le bras pivotant (4, 8) comporte u
ne pince (5, 9),
**caractérisé en ce qu'**un entraînement (20) de la pince (5, 9) est disposé sur ou dans le bras pivotant (4, 8), étant précisé que la pince (5, 9) est apte à être actionnée à l'aide d'un mouvement linéaire (P6) qui part de l'entraînement (20), que le mouvement linéaire (P6) est apte à être transmis à l'aide d'une tige (21) à un engrenage (19) de la pince (5, 9), et que l'engrenage (19) transforme le mouvement linéaire (P6) en deux mouvements rotatifs symétriques et opposés.

2. Dispositif selon la revendication 1, **caractérisé en ce que** la pince (5, 9) est disposée à une extrémité du bras pivotant (4), et l'actionneur (20) à l'autre extrémité du bras pivotant (4).

3. Dispositif selon la revendication 1 ou 2, **caractérisé en ce que** l'engrenage (19) comporte un pignon conique (24), apte à être actionné à l'aide de la tige (21), qui vient en prise avec deux autres pignons coniques (27, 29), étant précisé que ces deux autres pignons coniques (27, 29) entraînent chacun un levier de pince (28, 30) avec une mâchoire (16, 17).

4. Dispositif selon la revendication 3, **caractérisé en ce que** les autres pignons coniques (27, 29) et les leviers de pince (28, 30) sont disposés sur un axe (18).
